# EUROPÄISCHE PATENTANMELDUNG

(11) **EP 0 560 230 A1**
(43) Veröffentlichungstag der Anmeldung: **15.09.1993**
(21) Anmeldenummer: 93103591.9
(22) Anmeldetag: 05.03.1993
(51) Int. Cl.: G02B 6/38, G02B 6/44

(54) **Befestigungssockel für Fiber-Optik-Anschlussmodule**

(30) Priorität: 07.03.1992 DE 9203031 U
(71) Anmelder: Albert Ackermann GmbH & Co. KG, D-51643 Gummersbach (DE)
(72) Erfinder: Bogdan, Gabriel, W-5270 Gummersbach (DE); Müller, Siegfried, W-5277 Marienheide (DE); Nagel, Michael, W-5250 Engelskirchen (DE)
(74) Vertreter: Wilhelm & Dauster Patentanwälte European Patent Attorneys

(57) **Zusammenfassung**

Befestigungssockel für Fiber-Optik-Anschlußmodule, der eine Halterung besitzt, die mit einer Befestigungsstange (21) zum Einhängen eines der Enden von einem oder zwei nebeneinanderliegenden Anschlußmodulen versehen ist. Die Halterung ist als ein rinnenförmiges Klemmführungsstück (2) aus elastischem Kunststoff ausgeführt und besitzt an einer Stirnseite einen abragenden Bügel (11), dessen Quersteg die Befestigungsstange (21) bildet. Beide Schenkel und der diese verbindende Steg des Klemmführungsstückes (2) sind jeweils mit mindestens einem federnd ausgebildeten Rasthaken (8) und mit Anschlagflächen (18) versehen, die zur Anlage und Befestigung an einem Öffnungsrand einer Montageplatte dienen.

## Beschreibung

Die Erfindung betrifft einen Befestigungssockel für Fiber-Optik-Anschlußmodule, bestehend aus einer Halterung, die mit einer Befestigungsstange zum Einhängen eines der Enden von einem oder zwei nebeneinanderliegenden Anschlußmodulen versehen ist.

Befestigungssockel dieser Art sind bekannt (2340 Fiber Distribution Unit FTM-SO2 Instructions der Firma 3M TelComm Products Division USA, Ausgabe Juni 1990). Diese bekannten Befestigungssockel bestehen im wesentlichen aus einer Metallplatte von U-förmigem Querschnitt, zwischen deren Seitenwänden die Befestigungsstange verläuft und die von einem Deckel abgeschlossen werden kann. Befestigungssockel dieser Art dienen zur Befestigung an Wänden. Die bekannten Einrichtungen lassen das Auswechseln der Fiber-Optik-Anschlußmodule, die an den Befestigungsstangen eingehängt und dann innerhalb der Metallführung angeklemmt werden, nur zu, wenn die Abdeckung vorher entfernt wird.

Der Erfindung liegt die Aufgabe zugrunde, einen Befestigungssockel der eingangs genannten Art so auszubilden, der selbsttragend ist und formschlüssig in beliebige Front- oder Montageplatten einrastbar ist und auch eine leichte Demontage zuläßt. Der neue Befestigungssockel soll dazu dienen, eine Einzel- oder Reihenanordnung von Fiber-Optik-Anschlußmodulen für Lichtwellenleiter-Verbindungen an Front- oder Montageplatten, z.B. von 19 Zoll Panels in Datenschränken, in Installationskanälen für Wand- bzw. Decken- oder Säulenmontage von Unterflur- oder Aufflurinstallationssystemen zu ermöglichen.

Zur Lösung dieser Aufgabe wird bei einem Befestigungssockel der eingangs genannten Art vorgesehen, daß die Halterung als ein aus elastischem Kunststoff bestehendes rinnenförmiges Klemmführungsstück mit einem an einer Stirnseite vorgesehenen abragenden Bügel ausgebildet ist, dessen Quersteg die Befestigungsstange bildet und daß die beiden Schenkel und der diese verbindende Steg des Klemmführungsstückes jeweils mit mindestens einem federnd ausgebildeten Rasthaken und diesen zugeordneten Anschlagflächen zur Anlage und Befestigung an einem Öffnungsrand einer Montageplatte versehen sind.

Durch diese Ausgestaltung kann der Befestigungssockel in entsprechende Öffnungen von Front- oder Montageplatten einseitig eingeschoben werden, bis er formschlüssig in diesen Öffnungen verrastet. Die Einbaumöglichkeiten sind dadurch wesentlich erweitert. Der neue Befestigungssockel kann bausteinartig auch zu mehreren nebeneinander oder untereinander in entsprechende Montageplatten eingesetzt werden.

Vorteilhafte Weiterbildungen der Erfindung ergeben sich aus den Unteransprüchen. Dabei ist in Anspruch 2 zweckmäßig, wenn alle Anschlagflächen in einer Ebene angeordnet sind und wenn der Abstand zwischen den Anlageflächen und den Rasthaken der Stärke der Montageplatte entspricht. Es genügt dann nämlich das Einschieben des Befestigungssockels bis zum Einschnappen der Rasthaken. Gesonderte Befestigungsvorgänge werden überflüssig.

Nach Anspruch 3 ist es vorteilhaft, wenn das Klemmführungsstück die Form eines U mit senkrecht von dem Quersteg abstehenden Schenkeln besitzt und wenn die Montageplatte mit im wesentlichen rechteckigen Öffnungsbereichen zum Einsetzen eines oder mehrerer der Klemmführungsstücke versehen ist. Anspruch 4 sieht vor, daß jedem Öffnungsbereich der Montageplatte zwei einseitig angeordnete, in den Öffnungsbereich hereinragende Laschen zugeordnet sind, die im Bereich der Oberkante der Schenkel des Klemmführungsstückes liegen. Nach Anspruch 5 kann dabei jeweils zwei Laschen eine am gegenüberliegenden Öffnungsrande vorgesehene Aussparung zugeordnet sein, die im Bereich eines der Außenseite des Quersteges zugeordneten Rastnase liegt. Diese Ausgestaltung ermöglicht es daher, die Laschen zum Zusammenwirken mit den Rasthaken auszunützen, die so ausgebildet werden, daß ihre Anschlagflächen auf einer Seite der Montageplatten liegen während die Rasthaken selbst auf der gegenüberliegenden Seite sind. Die Rasthaken lassen sich daher nach dem Einschnappen durch seitlichen Druck wieder öffnen, wenn dies gewünscht ist. Die Aussparung am anderen Rand dient dabei dazu, das Einführen eines Werkzeuges zu ermöglichen, mit dem die Rastnase am Quersteg so zur Seite gedrückt werden kann, daß die Demontage möglich wird.

Nach Anspruch 7 ist es besonders einfach, wenn alle Öffnungsbereiche für nebeneinander anzuordnende Befestigungssockel durch einen durchgehenden Schlitz in der Montageplatte gebildet sind, der durch die von seinem Rand einseitig abragenden Laschen in die nebeneinanderliegenden Öffnungsbereiche unterteilt ist.

Vorteilhaft ist es auch, wenn nach den Ansprüchen 8 und 9 in der Klemmführung selbst ein zwischen den beiden Schenkeln verlaufende Distanzsteg vorgesehen ist, der in der Symmetrieebene zu diesen Schenkeln liegt. Diese Ausgestaltung ermöglicht in besonders sicherer Weise die Führung von zwei Fiber-Optik-Anschlußmodulen, die jeweils an der Befestigungsstange eingehängt und dann im Klemmführungsstück gehalten werden.

Die Erfindung ist anhand von Ausführungsbeispielen in der Zeichnung dargestellt und wird im folgenden erläutert. Es zeigen:
- Fig. 1: die perspektivische Ansicht eines U-förmigen Befestigungssockels nach der Erfindung, mit einem nachträglich einsetzbaren Führungsbügel,
- Fig. 2: die perspektivische Ansicht einer anderen Ausführungsform eines erfindungsgemäßen Befestigungssockels mit einem angespritzten Führungsbügel,
- Fig. 3: ein an sich bekanntes einzelnes Fiber-Optik-Anschlußmodul mit einer kastenförmigen Aufnahme für die Faserverbindung und einem zylindrischen Steckbuchsenansatz,
- Fig. 4: den Schnitt durch den Befestigungssockel der Fig. 1 mit einem Fiber-Optik-Anschlußmodul, der in den Führungsbügel eingesetzt wird,
- Fig. 5: eine Darstellung ähnlich Fig. 4 jedoch mit eingesetztem Anschlußmodul vor dem Herunterklappen und Verklemmen,
- Fig. 6: den Befestigungssockel der Fig. 1 mit zwei eingesetzten Fiber-Optik-Anschlußmodulen, der fertig zum Einsetzen in eine Montageöffnung ist,
- Fig. 7: die Teilansicht einer Montageplatte einer 19 Zoll Einschubeinheit mit Montageöffnungen für die Baueinheit nach Fig. 6 und
- Fig. 8: schließlich die Seitenansicht der Montageplatte der Fig. 7 mit eingesetztem Befestigungssockel.

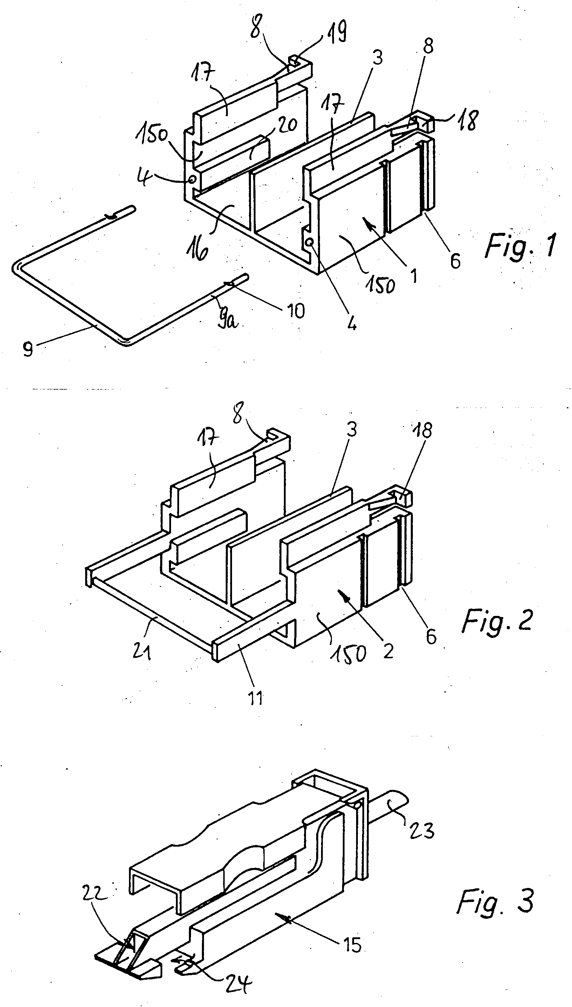

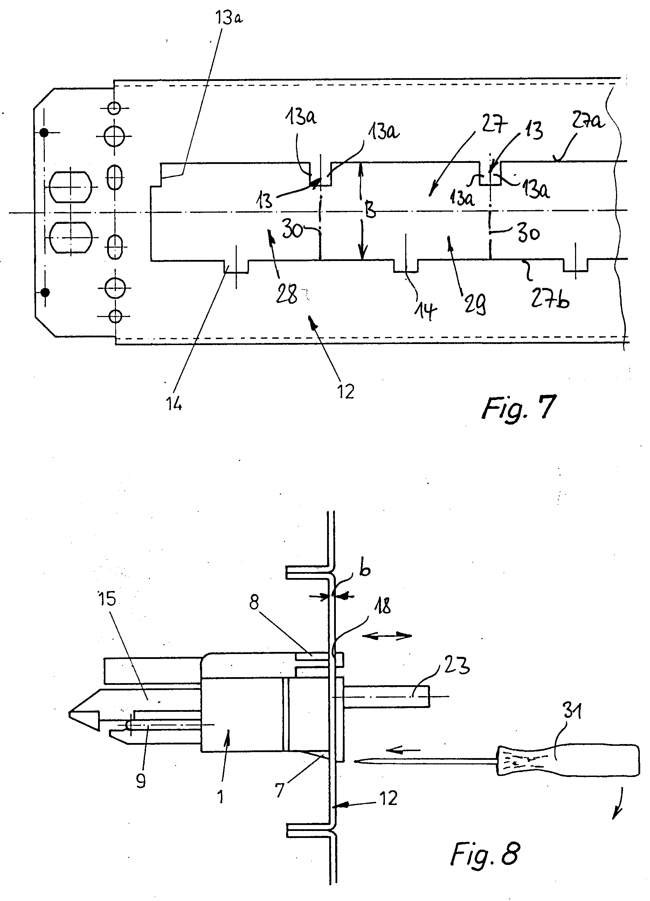

In der Fig. 1 ist ein Klemmführungsstück (1) gezeigt, das aus einem elastischen Kunststoff besteht und im wesentlichen die Form eines kurzen U-Profilstückes besitzt, dessen beide Schenkel (150) senkrecht auf dem mittleren Quersteg (16) stehen. In der Symmetrieebene zwischen den beiden Schenkeln (150) verläuft parallel zu den Schenkeln (150) ein Distanzsteg (3) und jeweils an den Oberkanten der beiden Schenkel (150) sind von der Außenfläche der Schenkel (150) nach innen versetzte Wandteile (17) angeordnet, die nach einer Seite in federnde Rasthaken (8) übergehen, denen am freien Ende Anschlagflächen (18) zugeordnet sind. Diese Anschlagflächen (18), die an einem abgewinkelten Endstück der Rasthaken (8) vorgesehen sind, besitzen einen Abstand von den ihnen zugewandten Stirnenden der Rasthaken (8), der der Breite (b) einer später noch zu erläuternden Montageplatte (12) entspricht, die in den Fig. 7 und 8 gezeigt ist. Fluchtend zu der Nut (19) zwischen den Anschlagflächen (18) und den Stirnseiten der Rasthaken (8) sind Nuten (6) an der Außenfläche der Schenkel (150) vorgesehen.

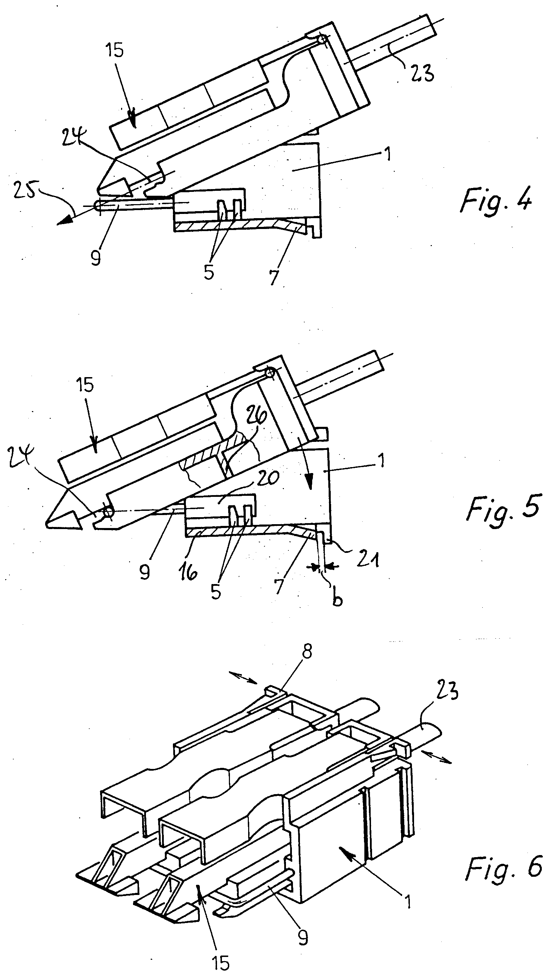

Auf der von den Rasthaken (8) abgewandten Stirnseite der Schenkel (150) sind an der Stirnseite von entsprechend parallel zum Quersteg (16) verlaufenden Rippen (20) Bohrungen (4) vorgesehen, in die die beiden Schenkel (9a) eines Metallbügels (9) eingeführt und mit Widerhaken (10) in den Bohrungen (4) gehalten werden. Auf der von den Bohrungen (4) abgewandten Stirnseite befindet sich, wie den Fig. 4 und 5 zu entnehmen ist, eine von der Unterseite des Quersteges (16) aus nach unten vorstehender Rand (21), der einer Rastnase (7) gegenüberliegt und mit dieser wiederum einen Spalt mit der Breite (b) bildet. Zwischen dem Distanzsteg (3) und jeweils einem der Schenkel (150) sind außerdem Klemmanschläge (5) vorgesehen, deren Bedeutung anhand der Fig. 5 auch noch erläutert werden wird.

Die Fig.2 zeigt ein Klemmführungsstück (2), das im wesentlichen ähnlich aufgebaut ist, wie das Klemmführungsstück (1) der Fig.1. Die gleichen Teile haben daher auch die gleichen Bezugszeichen erhalten. Unterschiedlich ist lediglich, daß anstelle des Metallbügels (9) fluchtend zu den Schenkeln (150) Arme (11) angespritzt sind, deren freie Enden durch eine Stange (21) verbunden sind, welche die gleiche Funktion wie der Quersteg des Bügels (9) ausübt. Anhand der Fig. 4 bis 6 wird erläutert werden, wie Fiber-Optik-Anschlußmodule, die in Fig. 3 gezeigt sind, in einem Klemmführungsstück (1) nach Fig. 1 montiert werden. Die Montage von Fiber-Optik-Anschlußmodulen erfolgt in gleicher Weise in einem Klemmführungsstück (2) nach Fig. 2.

Die Fig. 3 zeigt ein an sich bekanntes Fiber-Optik-Anschlußmodul, das auf einer Seite eine kastenförmige Aufnahme (22) für die Faserverbindung und auf der anderen Seite einen zylindrischen Steckbuchsenansatz (23) aufweist. Das Fiber-Optik-Anschlußmodul (15) besitzt im übrigen ein Sockelteil, das an seinem von der Anschlußbuchse (23) abgewandten Ende mit dem Teil (22) einen nach unten offenen Verriegelungsschlitz (24) bildet, der zur Aufnahme der Befestigungsstange (9 bzw. 21) dient.

Die Fig. 4 zeigt zunächst, daß das Fiber-Optik-Anschlußmodul (15) seitlich von oben in eine der beiden offenen Führungen zwischen Schenkel (150) und Distanzsteg (3) eingesetzt wird, und zwar so, daß der nach unten offene Befestigungsschlitz (24) auf den Querbügel des Bügels (9) geschoben werden kann. Zu diesem Zweck wird das Fiber-Optik-Anschlußmodul (15) in der Richtung des Pfeiles (25) der Fig. 4 vorgeschoben, bis die in der Fig. 5 dargestellte Stellung erreicht ist, in der der Querbügel des Bügels (9) in einer entsprechenden Rastausnehmung des Befestigungsschlitzes (24) aufgenommen ist.

Aus dieser in der Fig. 5 dargestellten Montagelage wird das Fiber-Optik-Anschlußmodul (15) im Uhrzeigersinn um den Quersteg des Bügels (9) herum verschwenkt, bis ein an dem Sockel des Fiber-Optik-Anschlußmoduls (15) befindlicher Quersteg (26) zwischen zwei am Quersteg (16) angebrachten hochstehenden Anschlagstegen (5) klemmend aufgenommen ist. Wird der gleiche Vorgang mit einem zweiten Fiber-Optik-Anschlußmodul wiederholt, der in die andere Führung zwischen dem Distanzsteg (3) und dem anderen Schenkel des Klemmführungssteges (1) eingesetzt wird, dann erhält man ein fertig bestücktes Klemmführungsstück (1) gemäß Fig. 6, in dem sich zwei Fiber-Optik-Anschlußmodule (15) nebeneinander und exakt geführt befinden.

Die Fig. 7 zeigt eine Montageplatte (12), wie sie beispielsweise als vorderer Abschluß eines Einschubs eines Schaltschrankes o.dgl. einer 19 Zoll Panel-Anordnung vorgesehen ist. Diese Montageplatte (12) besitzt in ihrer Mitte einen durchgehenden Schlitz (27) mit der Breite (B). Diese Breite (B) ist auf die Höhe des Klemmführungsstückes (1) (bzw.des Klemmführungsstückes 2) abgestimmt. Der Schlitz (27) ist dabei durch mehrere von seinem oberen Rand (27a) aus nach unten ragende Laschen (13) in verschiedene Öffnungsbereiche (28, 29) unterteilt,wobei jeweils die in der Mitte jeder Lasche (13) verlaufende und senkrecht zu dem oberen Rand (27a) bzw. zum unteren Rand (27b) verlaufende Ebene (30) die seitliche Begrenzung eines der Öffnungsbereiche (28 oder 29) darstellt. Jedem Öffnungsbereich (28 bzw. 29) sind daher am Rand (27a) Laschen (13a) mit der halben Breite der Laschen (13) zugeordnet. In der Mitte zwischen diesen Laschenbereichen (13a) befindet sich eine Ausnehmung (14), und zwar am gegenüberliegenden Rand (27b) des Schlitzes (27).

Die Ausgestaltung ist dabei so getroffen, daß die Laschenbereiche (13a) den Anschlagflächen (18) der Rasthaken (8) und die Ausnehmung (14) dem Bereich der Rastnase (7) zugeordnet ist. Die Breite der Ausnehmungen (14) ist dabei kleiner gewählt als die Breite der Rastnase (7). Wird daher das Klemmführungsstück (1) der Fig. 6 in einen der Öffnungsbereiche (28 oder 29) eingeschoben, dann legt sich der nach unten stehende Rand (21) an den Bereichen links und rechts von der Ausnehmung (14) an, während die Rastnase (7) selbst im Abstand (b) auf der anderen Seite der Montageplatte den Rand (27b) neben der Öffnung (14) hintergreift. Die Rasthaken (8) schnappen auf derselben Seite wie die Rastnase (7) hinter die Laschenbereiche (13a), während die Anschlagflächen (18) auf der Vorderseite der Montageplatte zu liegen kommen, wie dies aus Fig. 8 deutlich zu erkennen ist. Das Klemmführungsstück (1) mit den eingesetzten Fiber-Optik-Anschlußmodulen (15) kann auf diese Weise daher entweder allein oder mit mehreren gleichartigen Klemmführungsstücken nebeneinander in die Öffnungbereiche (28 bzw.29) der Montageplatte (12) eingeschoben und ohne Werkzeug verrastet werden. Die Verbindung der wellenoptischen Leiter ist dann über den Steckbuchsenansatz (23) ohne weiteres möglich.

Soll das Klemmführungsstück (1) wieder gelöst werden, so genügt es, die Enden der Rasthaken (8), welche die Anschlagflächen (18) aufweisen, jeweils in Richtung zum Inneren des zugeordneten Öffnungsbereiches (28) zu drücken, so daß sich dadurch die Rasthaken von dem Rand der Laschenbereiche (13a) lösen. Mit Hilfe eines Schraubendrehers (31) kann in die Aussparungen (14) gegriffen werden, so daß auch die Rastnase (7) zurückgedrückt und das Klemmführungsstück (1) wieder von der Montageplatte (12) entfernt werden kann.

## Patentansprüche

1. Befestigungssockel für Fiber-Optik-Anschlußmodule, bestehend aus einer Halterung, die mit einer Befestigungsstange zum Einhängen eines der Enden von einer oder zwei nebeneinanderliegenden Anschlußmodulen versehen ist, dadurch gekennzeichnet, daß die Halterung als ein aus elastischem Kunststoff bestehendes, rinnenförmiges Klemmführungsstück (1, 2) mit einem an einer Stirnseite vorgesehenen, abragenden Bügel (9, 11) ausgebildet ist, dessen Quersteg die Befestigungsstange bildet, und daß die beiden Schenkel (150) und der diese verbindende Steg (16) des Klemmführungsstückes (1,2) jeweils mit mindestens einem federnd ausgebildeten Rasthaken (7,8) und diesen zugeordneten Anschlagflächen (21, 18) zur Anlage und Befestigung an einem Öffnungsrand (27a, 27b) einer Montageplatte (12) versehen sind.

2. Befestigungssockel nach Anspruch 1, dadurch gekennzeichnet, daß alle Anschlagflächen (21, 18) in einer Ebene angeordnet sind und daß der Abstand (b) zwischen den Anlageflächen und den Rasthaken (7, 8) der Stärke der Montageplatte (12) entspricht.

3. Befestigungssockel nach Anspruch 1 und 2, dadurch gekennzeichnet, daß das Klemmführungsstück (1, 2) die Form eines U mit senkrecht von dem Quersteg (16) abstehenden Schenkeln (150) besitzt und daß die Montageplatte (12) mit im wesentlichen rechteckigen Öffnungsbereichen (28, 29) zum Einsetzen eines oder mehrerer der Klemmführungsstücke (1, 2) versehen ist.

4. Befestigungssockel nach Anspruch 3, dadurch gekennzeichnet, daß jedem Öffnungsbereich (28, 29) der Montageplatte (12) zwei einseitig angeordnete, in den Öffnungsbereich hereinragende Laschen (13a) zugeordnet sind, die im Bereich der Oberkante der Schenkel (150) des Klemmführungsstückes (1,2) liegen.

5. Befestigungssockel nach Anspruch 4, dadurch gekennzeichnet, daß jeweils zwei Laschen (13a) einer am gegenüberliegenden Öffnungsrand (27b) vorgesehene Aussparung (14) zugeordnet ist, die im Bereich einer der Außenseite des Querstegs (16) zugeordneten Rastnase (7) liegt.

6. Befestigungssockel nach Anspruch 4 und 5, dadurch gekennzeichnet, daß im Bereich der Oberkante jedes Schenkels (150) des Klemmführungsstückes (1, 2) federnde Rastarme (17) vorgesehen sind, die im wesentlichen parallel zu dem Quersteg (16) verlaufen und beim Einschieben des Klemmführungsstückes (1, 2) in die Montageplatte (12) die Laschen (13a) hintergreifen.

7. Befestigungssockel nach den Ansprüchen 3 bis 6, dadurch gekennzeichnet, daß alle Öffnungsbereiche (28, 29) durch einen durchgehenden Schlitz (27) gebildet sind, der durch von seinem Rand (27a) einseitig abragenden Laschen (13) in die Öffnungsbereiche (28, 29) unterteilt ist.

8. Befestigungssockel nach Anspruch 1, dadurch gekennzeichnet, daß in dem Klemmführungsstück (1, 2) ein zwischen den beiden Schenkeln (150) verlaufender Distanzsteg (3) vorgesehen ist.

9. Befestigungssockel nach Anspruch 8, dadurch gekennzeichnet, daß der Distanzsteg (3) parallel zu den Seitenwänden der Schenkel (150) und in einer Symmetrieebene zu diesen angeordnet ist.
